# EUROPEAN PATENT SPECIFICATION

(11) **EP 0 531 920 B1**
(45) Date of publication and mention of the grant of the patent: **09.02.2000**
(21) Application number: 92115282.3
(22) Date of filing: 07.09.1992
(51) Int. Cl.: C08G 64/04

(54) **Polycarbonate resins having terminal vinyl groups and process for producing the same**
Polycarbonatharze mit Vinylendgruppen und Verfahren zu ihrer Herstellung
Résines de polycarbonate ayant des groupes terminaux vinyliques et procédé pour leur préparation

(30) Priority: 12.09.1991 JP 26103791; 12.09.1991 JP 26103891
(43) Date of publication of application: 17.03.1993
(73) Proprietor: MITSUBISHI GAS CHEMICAL COMPANY, INC., Tokyo 100-0005 (JP)
(72) Inventor: Kanayama, Satoshi, c/o Mitsubishi Gas, Toyonaka-shi, Osaka (JP)
(74) Representative: Hansen, Bernd, Dr. Dipl.-Chem.

(56) References cited:
- EP-A- 0 006 579
- EP-A- 0 072 065
- WO-A-82/02389
- US-A- 5 063 130

## Description

### BACKGROUND OF THE INVENTION

### 1) Field of the Invention

The present invention relates to novel polycarbonate oligomers or resins having terminal vinyl groups and a process for producing the same. By virtue of vinyl groups existing at the polymer terminals, the present polycarbonate oligomers or resin (hereinafter referred to as "polycarbonate resin") are useful for various applications such as raw materials for producing block copolymers with other resins, a reactive resin modifier, or film materials.

### 2) Prior Art

Heretofore, it has been known to use monovalent phenols such as p-tertiary butylphenol, phenol, etc. as a terminating agent or a molecular weight modifier for polycarbonate resins or to use long chain alkylphenols to improve their flowability (Japanese Patent Publication No. 52-50078).

The polycarbonate resins produced with these prior art molecular weight modifiers, have essentially inactive polymer terminals, because their molecular chain terminals are closed. Thus, in their modifications by making their compositions with other resins or fillers, their mating resins are limited or the heat resistance of the resulting compositions are deteriorated due to simple blending.

Polycarbonate resin block copolymers prepared by addition polymerisation of terminally unsaturated polycarbonate resins with a vinyl compound are disclosed in Japanese Patent Publication No. 48-25076, where aliphatic compounds are exemplified as unsaturated groups and vinylphenol is also disclosed. However, since the vinyl group of vinylphenol as an aromatic compound is highly reactive, gels are formed during the reaction. That is, it has been desired to obtain highly stable polycarbonate resins having vinyl terminals.

EP-A-0 072 065 discloses cross-linkable polymers which contain a backbone segment which may be formed from *inter alia* a polycarbonate chain which have pendent therefrom substituted olefinic groups which may be selected from *inter alia* p-vinylbenzoic acid.

EP-A-0 006 579 discloses high-molecular weight aromatic polycarbonates based on diphenols and monofunctional chain stoppers of the following formula 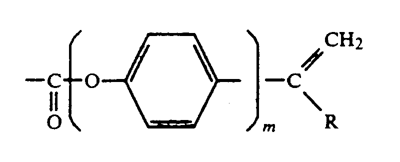 in which m is 0 or 1, and R is either a hydrogen atom or a C₁₋₃ alkyl group.

### SUMMARY OF THE INVENTION

As a result of extensive studies to alleviate these disadvantages connected with the prior art, the present inventors have found that polycarbonate resins having vinylbenzoic acid terminals have a very good stability.

An object of the present invention is to provide highly stable polycarbonate resins having vinyl terminals.

Another object of the present invention is to provide a process for producing highly stable polycarbonate resins having vinyl terminals.

That is, the present invention provides a polycarbonate resin whose polymer chains contain on average more than 20 to 400 structural units represented by the following general formula (1) 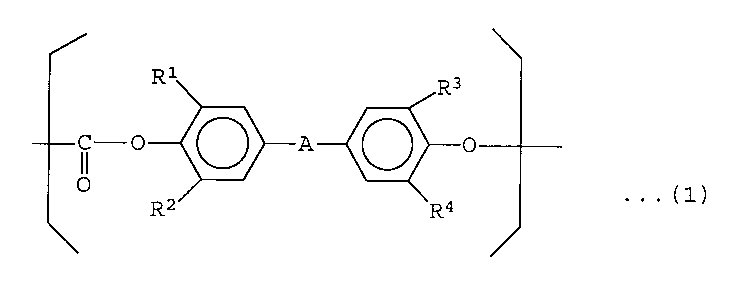 and having terminal groups represented by the following general formula (2) bonded to the bisphenol residues of the general formula (1): 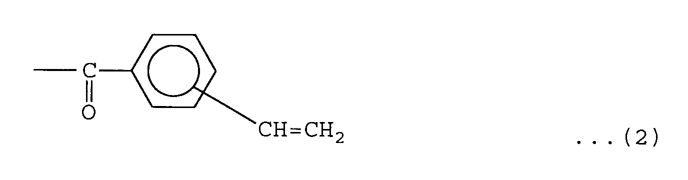 wherein A represents a straight, branched or cyclic alkylidene group having 1 to 10 carbon atoms, an aryl-substituted alkylidene group, an arylene group, or -O-, -S-, -CO-, -SO- or -SO₂-; and R¹, R², R³ and R⁴ are the same or different from one another and each represents hydrogen, halogen, an alkyl group having 1 to 6 carbon atoms or an aryl group.

Furthermore, the present invention provides a process for producing a polycarbonate resin having vinyl terminals by:
(a) interfacial polymerisation carried out by reacting a divalent phenol compound with phosgene in an inert organic solvent in the presence of an aqueous alkali solution, then adding a molecular weight modifier and a polymerisation catalyst to the reaction mixture, or
(b) solution polymerisation carried out by dissolving a divalent phenol compound and a molecular weight modifier in pyridine or a mixture of pyridine and an inert solvent, and introducing phosgene thereto,
   characterised in that the molecular weight modifier is a vinylbenzoic acid represented by the following general formula (3):

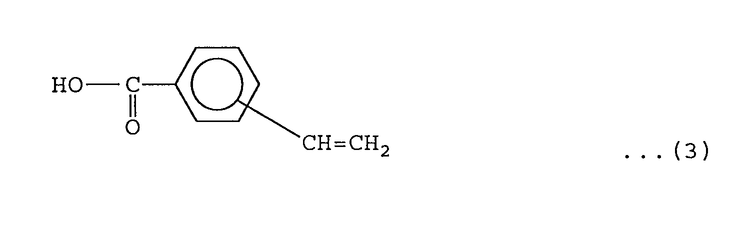

### DETAILED DESCRIPTION OF THE INVENTION

In the present invention, the polycarbonates having structural units of more than 20 to 400 or below on average represented by the formula (1) are called "polycarbonate resins". As well as such resins, the process of the present invention is also capable of producing polycarbonates having 2-20 structural units. These lower molecular weight compounds are called "polycarbonate oligomers".

The number of the structural units represented by formula (1) roughly depends on an amount of a molecular weight modifier to be used. Thus, in the production of polycarbonate oligomers, 100 to 10 moles, preferably 40 to 20 moles, of vinylbenzoic acid represented by the general formula (3) is used per 100 moles of a divalent phenol compound. In the production of polycarbonate resins, 10 to 0.5 moles, preferably 7 to 2 moles, of the vinylbenzoic acid is used per 100 moles of the divalent phenol compound. In the present invention, a so far well known molecular weight modifier can be used together with the vinylbenzoic acid represent by the general formula (3).

The present polycarbonate resins can be produced in the same manner as in the conventional process for producing polycarbonate resins except that vinylbenzoic acid represented by the general formula (3), for example, 2-vinylbenzoic acid, 4-vinylbenzoic acid, etc. is used as a molecular weight modifier or a terminating agent. That is, the present polycarbonate resins can be produced by interfacial polymerization or solution polymerization, using a vinylbenzoic acid represented by the general formula (3) as a molecular weight modifier or a terminating agent.

In the interfacial polymerization, a divalent phenol compound is reacted with phosgene in an inert organic solvent in the presence of an aqueous alkali solution and then the molecular weight modifier and a polymerization catalyst such as a tertiary amine or a quaternary amine are added to the reaction mixture, thereby conducting polymerization.

In the solution polymerization using pyridine, a divalent phenol compound and the molecular weight modifier are dissolved in pyridine or a mixture of pyridine with an inert solvent, and phosgene is introduced into the solution, thereby directly producing the polycarbonate resins.

In the interfacial polymerization, the molecular weight modifier can be added during the reaction of the divalent phenol compound with the phosgene.

The present polycarbonate resins can be used in various applications. In paint applications, polycarbonate oligomers produced by the process of the present invention are used, and preferable divalent phenol compounds for the paint applications include 1,1-bis(4-hydroxyphenyl)cyclohexane, 1,1-bis(4-hydroxyphenyl)-1-phenylethane, 2,2-bis(4-hydroxy-3-methylphenyl)propane, etc.

Specifically preferable divalent phenol compounds for the present polycarbonate resins include, for example, bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)-ethane, 2,2-bis(4-hydroxyphenyl)propane, 2,2-bis(4-hydroxyphenyl)butane, 1,1-bis(4-hydroxyphenyl)cyclo-hexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, etc.

Inert organic solvents for use in the present invention include, for example, chlorinated hydrocarbons such as dichloromethane, 1,2-dichloroethane, 1,1,2,2-tetrachloroethane, chloroform, 1,1,1-trichloroethane, carbon tetrachloride, monochlorobenzene, dichlorobenzene, etc.; aromatic hydrocarbons such as benzene, toluene, xylene, ethylbenzene, etc.; and etheral compounds such as diethylether, etc., and can be used in a mixture thereof. If desired, solvents with an affinity to water, such as other ethers than the above-mentioned, ketones, esters, nitriles, etc. can be used within such a range that the resulting solvent mixture may not be completely solvent in water.

Polymerization catalysts for use in the present invention include, for example, tertiary amines such as trimethylamine, triethylamine, tributylamine, tripropylamine, trihexylamine, tridecylamine, N,N-dimethylcyclohexylamine, pyridine, quinoline, dimethylaniline, etc., and tertiary amines such as trimethylbenzylammonium chloride, tetramethylammonium chloride, triethylbenzylammonium chloride, etc.

The present polycarbonate resins are produced from the above mentioned components as essential ones. A branching agent can be used together in the present invention. That is, 0.01 to 3% by mole, particularly 0.1 to 1.0% by mole, of a branching agent can be used on the basis of the divalent phenol compound to produce branched polycarbonates. Branching agents for use in the present invention include, for example, polyhydroxy compounds such as fluoroglycine, 2,6-dimethyl-2,4,6-tri(4-hydroxyphenyl)heptene-3, 4,6-dimethyl-2,4,6-tri(4-hydroxyphenyl)heptene-2, 1,3,5-tri(2-hydroxyphenyl)benzene, 1,1,1-tri(4-hydroxyphenyl)ethane, 2,6-bis(2-hydroxy-5-methylbenzyl)-4-methylphenol, α,α',α''-tri(4-hydroxyphenyl)-1,3,5-triisopropylbenzene, etc.; 3,3-bis(4-hydroxyaryl)oxyindol (=isatinbisphenol), 5-chloroisatinbisphenol, 5,7-dichloroisatinbisphenol, 5-bromoisatinbisphenol, etc.

The present polycarbonate resins have highly active terminals and thus can be used as raw materials for copolymerization or for the production of compositions with such resins that are not readily compatible with the conventional polycarbonates, resulting in failure to form useful compositions, that is, for the production of compositions with other polymers readily reactable with vinyl groups by melt mixing. That is, the present polycarbonate resins can be used alone or together with conventional polycarbonate resins.

The present polycarbonate resins may further contain an antioxidant, a photo-stabilizer, a coloring agent, an inorganic or organic filler, a reinforcing agent such as carbon fibers, glass fibers, a lubricant, an antistatic agent, etc., when desired in view of end use.

### PREFERRED EMBODIMENTS OF THE INVENTION

The present invention will be described in detail below, referring to Examples and Comparative Examples.

### Example 1

3.7 kg of sodium hydroxide was dissolved in 42 ℓ of water, and further 7.3 kg of 2,2-bis(4-hydroxyphenyl)propane (which will be hereinafter referred to as "BPA") and 8 g of sodium hydrosulfite were dissolved therein, while keeping the solution at 20°C.

Then, 28 ℓ of methylene chloride (which will be hereinafter referred to as "MC") was added thereto, and 156 g of p-vinylbenzoic acid (which will be hereinafter referred to "Al") was added thereto with stirring. Then, 3.5 kg of phosgen was introduced therein over 60 minutes.

After the introduction of phosgen, the reaction solution was vigorously stirred to emulsify the solution. After the emulsification, 8 g of triethylamine (which will be hereinafter referred to as "TEA") was added thereto, and stirring was continued for about one hour to conduct polymerization.

Then, the polymerization solution was separated into an aqueous phase and an organic phase. The organic phase was neutralized with phosphoric acid and then repeatedly washed with water until the pH of the washing solution became neutral. Then, 35 ℓ of isopropanol was added thereto to precipitate the polymers. Then, the precipitates were recovered therefrom by filtration, and dried, whereby white powdery polycarbonate resin was obtained. Physical properties of the thus obtained polycarbonate resin are shown in Table 1.

### Comparative Example 1

Polymerization was carried out in the same manner as in Example 1 except that 158 g of p-t-butylphenol (which will be hereinafter referred to as "PTBP") was used in place of 156 g of A1. Physical properties of the resulting resin are shown in Table 1.

### Examples 2 to 5

Polycarbonate resins were prepared from of various compositions shown in Table 1 in the same manner as in Example 1, and physical properties of the resulting resins are shown in Table 1.

Abbreviations used in Table 1 have the following meanings:
- BPA:: 2,2-bis(4-hydroxyphenyl)propane
- BPZ:: 1,1-bis(4-hydroxyphenyl)cyclohexane
- BPAP:: 1,1-bis(4-hydroxyphenyl)-1-phenylethane
- TBA:: 2,2-bis(4-hydroxy-3,5-dibromophenyl)propane
- A1:: 4-vinylbenzoic acid
- A2:: 2-vinylbenzoic acid
- PTBP:: p-tertiary butylphenol
- Mv:: viscosity average molecular weight
- IR:: Infrared absorption spectra by an infrared spectrometer IR-435, made by Shimadzu Seisakusho, K.K., Japan, based on KBr method and film method, where the presence or absence of stretching vibration of ester bond terminal (C=0) is shown.

**Table 1**

| Ex. & Comp. Ex. No. | Ex. 1 | Ex. 2 | Ex. 3 | Ex. 4 | Ex. 5 | Comp. Ex. 1 |
|---|---|---|---|---|---|---|
| Divalent phenol | BPA | BPA | BPAP | BPA/BPZ =1/1 | BPZ | BPA |
| Molecular weight modifier (% by mole) | A1 3.3 | A2 6.4 | A1 5.0 | A1 3.8 | A1 3.3 | PTBP 3.3 |
| Mv × 10⁴ | 2.5 | 1.6 | 2.0 | 2.1 | 2.4 | 2.5 |
| IR (1740 cm⁻¹) | occurred | occurred | occurred | occurred | occurred | none |

### Example 6

3.7 kg of sodium hydroxide was dissolved in 42 ℓ of water, and then 7.3 kg of 2,2-bis(4-hydroxyphenyl)propane (which will be hereinafter referred to as "BPA") and 8 g of sodium hydrosulfite were dissolved therein while keeping the solution at 20°C.

Then, 28 ℓ of methylene chloride (which will be hereinafter referred to as "MC") was added thereto, and 1.44 kg of p-vinylbenzoic acid (which will be hereinafter referred to as "A1") was added thereto with stirring, and then 4.4 kg of phosgene was introduced therein over 60 minutes.

After the introduction of phosgen, the reaction solution was vigorously stirred to emulsify the solution. After the emulsification, 8 g of triethylamine (which will be hereinafter referred to as "TEA") was added thereto, and stirring was continued for about one hour to carry out polymerization.

The resulting polymerization solution was separated into an aqueous phase and an organic phase, and the organic phase was neutralized with phosphoric acid and repeatedly washed with water until the pH of the washing solution became neutral, and then 35 ℓ of isopropanol was added thereto to precipitate the polymers. The precipitates were recovered by filtration and dried, whereby white powdery polycarbonate oligomer was obtained. Physical properties of the thus obtained polycarbonate oligomer are shown in Table 2.

Polymerization was carried out in the same manner as in Example 6 except that 1.46 kg of p-t-butylphenol (which will be hereinafter referred to as "PTBP") was used in place of 1.44 kg of A1. Physical properties of the product are shown in Table 2.

**Table 2**

| **Ex. & Comp. Ex. No.** | **Ex. 6** | **Comp. Ex. 2** |
|---|---|---|
| Divalent phenol | BPA | BPA |
| Molecular weight modifier (% by mole) | A1 | PTBP |
| | 30.4 | 30.4 |
| Mv x 10³ | 6.2 | 6.0 |
| IR (1740cm⁻¹) | occurred | none |

According to the present process, polycarbonate resins having vinyl terminals can be produced in the same manner as in the conventional process for producing an aromatic polycarbonate resin. The present polycarbonate resins having vinyl terminals have a good stability and can be used as blend materials with other resins that cannot produce useful compositions by simple blending due to a poor compatibility or as raw materials for block copolymers, by virtue of the vinyl groups.

## Claims

1. A polycarbonate resin whose polymer chains contain on average more than 20 to 400 structural units represented by the following general formula (1) 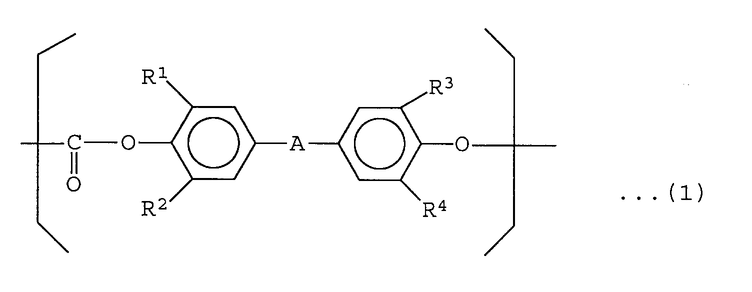 and having terminal groups represented by the following general formula (2) bonded to the bisphenol residues of the general formula (1): 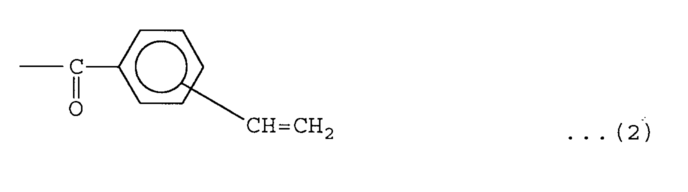 wherein A represents a straight, branched or cyclic alkylidene group having 1 to 10 carbon atoms, an aryl-substituted alkylidene group, an arylene group, or -O-, -S-, -CO-, -SO- or -SO₂-; and R¹, R², R³ and R⁴ are the same or different from one another and each represents hydrogen, halogen, an alkyl group having 1 to 6 carbon atoms or an aryl group.

2. A process for producing a polycarbonate resin having vinyl terminals by:
(a) interfacial polymerisation carried out by reacting a divalent phenol compound with phosgene in an inert organic solvent in the presence of an aqueous alkali solution, then adding a molecular weight modifier and a polymerisation catalyst to the reaction mixture, or
(b) solution polymerisation carried out by dissolving a divalent phenol compound and a molecular weight modifier in pyridine or a mixture of pyridine and an inert solvent, and introducing phosgene thereto,
characterised in that the molecular weight modifier is a vinylbenzoic acid represented by the following general formula (3):

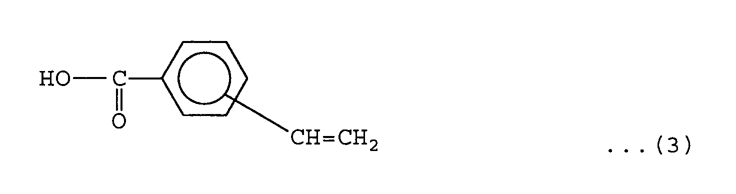

3. A process according to Claim 2, wherein polymerisation is carried out in the presence of a branching agent.

4. A process according to Claim 3, wherein the branching agent is fluoroglycine, 2,6-dimethyl-2,4,6-tri(4-hydroxyphenyl)-heptene-3, 4,6-dimethyl-2,4,6-tri(4-hydroxyphenyl)-heptene-2, 1,3,5-tri(2-hydroxyphenyl)benzene, 1,1,1-tri(4-hydroxyphenyl)ethane, 2,6-bis(2-hydroxy-5-methylbenzyl)-4-methylphenol, α,α',α''-tri(4-hydroxyphenol)-1,3,5-tri-isopropylbenzene, isatinbisphenol, 5-chloroisatinbisphenol, 5,7-dichloroisatinbisphenol or 5-bromoisatinbisphenol.

5. A process according to Claim 3 or Claim 4, wherein 0.01 to 3% by mole of the branching agent is used based upon the amount of the divalent phenol compound.

6. A process according to Claim 2, wherein 100 to 10 moles of the vinylbenzoic acid is used per 100 moles of the divalent phenol compound, thereby forming polycarbonate oligomers having vinyl terminals.

7. A process according to Claim 2, wherein 10 to 0.5 moles of the vinylbenzoic acid is used per 100 moles of the divalent phenol compound, thereby forming polycarbonate resins having vinyl terminals.

## Patentansprüche

1. Polycarbonatharz, dessen Ketten im Durchschnitt mehr als 20 bis 400 Struktureinheiten, dargestellt durch die folgende allgemeine Formel (1) 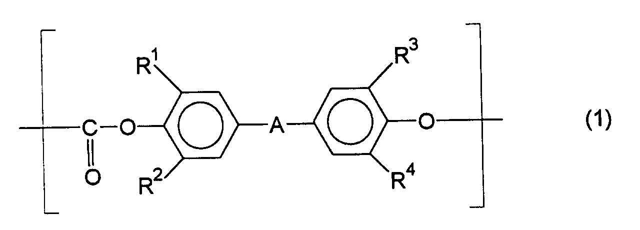 enthalten, und Endgruppen, dargestellt durch die folgende allgemeine Formel (2), gebunden an die Bisphenolreste der allgemeinen Formel (1) hat: 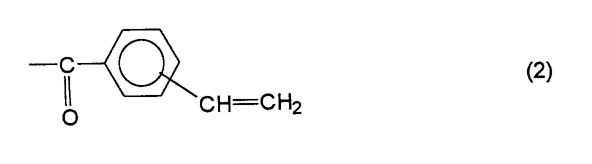 worin A eine gerade, verzweigte oder zyklische Alkylidengruppe mit 1 bis 10 Kohlenstoffatomen, eine arylsubstituierte Alkylidengruppe, eine Arylengruppe oder -O-, -S-, -CO-, -SO- oder -SO₂ darstellt, und R¹, R², R³ und R⁴ gleich oder verschieden voneinander sind und jedes Wasserstoff, Halogen, eine Alkylgrupe mit 1 bis 6 Kohlenstoffatomen oder eine Arylgruppe darstellt.

2. Verfahren zur Herstellung eines Polycarbonatharzes, das Vinylenden hat durch:
(a) Grenzflächenpolymerisation, durchgeführt durch Reaktion einer zweiwertigen Phenolverbindung mit Phosgen in einem inerten organischen Lösungsmittel in Anwesenheit einer wäßrigen alkalischen Lösung und anschließend Zugabe eines Molekulargewichtsmodifizierers und eines Polymerisationskatalysators zu der Reaktionsmischung, oder
(b) Lösungspolymerisation, durchgeführt durch Lösen einer zweiwertigen Phenolverbindung und eines Molekulargewichtsmodifizierers in Pyridin oder einer Mischung von Pyridin und einem inerten Lösungsmittel und Einleiten von Phosgen dazu,
dadurch gekennzeichnet, daß der
Molekulargewichtsmodifizierer eine Vinylbenzoesäure, dargestellt durch die folgende allgemeine Formel (3) ist:

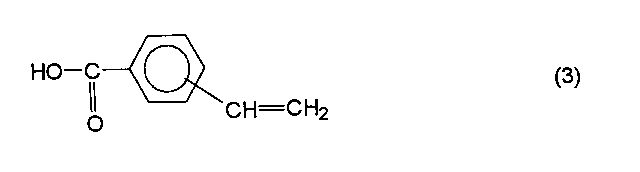

3. Verfahren gemäß Anspruch 2, wobei die Polymerisation in Anwesenheit eines Verzweigungsmittels durchgeführt wird.

4. Verfahren gemäß Anspruch 3, worin das Verzweigungsmittel Fluorglycin, 2,6-Dimethyl-2,4,6-tri(4-hydroxyphenyl)-hepten-3, 4,6-Dimethyl-2,4,6-tri(4-hydroxyphenyl)-hepten-2, 1,3,5-Tri(2-hydroxyphenyl)benzol, 1,1,1-Tri(4-hydroxyphenyl)ethan, 2,6-Bis(2-hydroxy-5-methylbenzyl)-4-methylphenol, α,α',α''-Tri(4-hydroxyphenol)-1,3,5-tri-isopropylbenzol, Isatinbisphenol, 5-Chlorisatinbisphenol, 5,7-Dichlorisatinbisphenol oder 5-Bromisatinbisphenol ist.

5. Verfahren gemäß Anspruch 3 oder Anspruch 4, worin 0,01 bis 3 Molprozent Verzweigungsmittel, bezogen auf die Menge der zweiwertigen Phenolverbindung, verwendet wird.

6. Verfahren gemäß Anspruch 2, worin 100 bis 10 Mol Vinylbenzoesäure pro 100 Mol der zweiwertigen Phenolverbindung verwendet wird und sich dabei Polycarbonoligomere mit Vinylenden bilden.

7. Verfahren gemäß Anspruch 2, worin 10 bis 0,5 Mol Vinylbenzoesäure pro 100 Mol der zweiwertigen Phenolverbindung verwendet wird und sich dabei Polycarbonatharze mit Vinylenden bilden.

## Revendications

1. Résine de polycarbonate dont les chaînes de polymère contiennent en moyenne plus de 20 à 400 motifs structuraux représentés par la formule générale (1) suivante 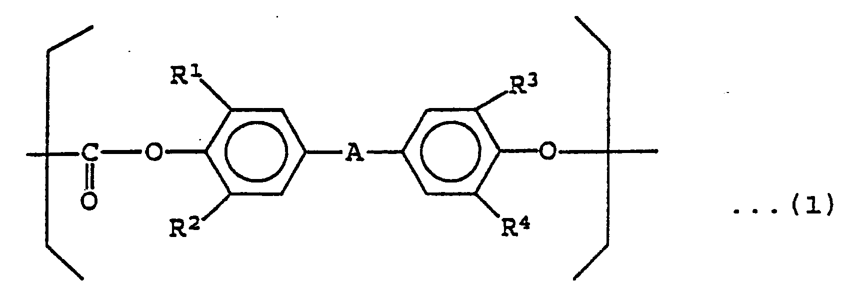 et comportant des groupes terminaux représentés par la formule générale (2) suivante liés aux restes bisphénol de formule générale (1) : 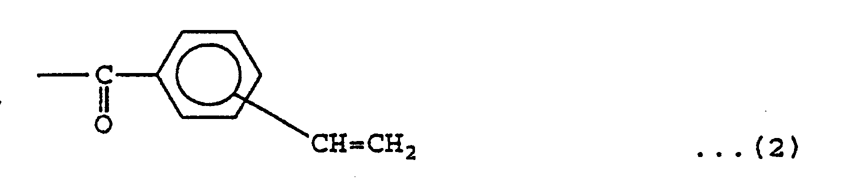 dans laquelle A représente un groupe alkylidène linéaire, ramifié ou cyclique comportant de 1 à 10 atomes de carbone, un groupe alkylidène aryl-substitué, un groupe arylène, ou bien -O-, -S-, -CO-, -SO- ou -SO₂-, et R¹, R², R³ et R⁴ sont les mêmes ou diffèrent les uns des autres et chacun représente un atome d'hydrogène, un atome d'halogène, un groupe alkyle comportant de 1 à 6 atomes de carbone ou un groupe aryle.

2. Procédé de fabrication d'une résine de polycarbonate comportant des groupes terminaux vinyliques par :
(a) une polymérisation interfaciale mise en oeuvre en faisant réagir un composé phénolique divalent avec du phosgène dans un solvant organique inerte en présence d'une solution alcaline aqueuse, puis en ajoutant un modificateur de masse moléculaire et un catalyseur de polymérisation au mélange réactionnel, ou
(b) une polymérisation en solution exécutée en dissolvant un composé phénolique divalent et un modificateur de masse moléculaire dans de la pyridine ou un mélange de pyridine et d'un solvant inerte, et en introduisant du phosgène dans celui-ci,
caractérisé en ce que le modificateur de masse moléculaire est un acide vinylbenzoïque représenté par la formule générale (3) suivante :

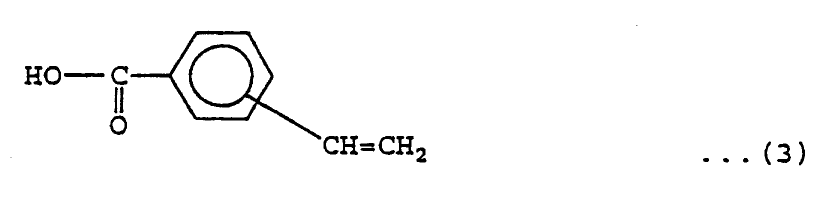

3. Procédé selon la revendication 2, dans lequel la polymérisation est exécutée en présence d'un agent de ramification.

4. Procédé selon la revendication 3, dans lequel l'agent de ramification est la fluoroglycine , le 2,6-diméthyl-2,4,6-tri(4-hydroxyphényl)heptène-3, le 4,6-diméthyl-2,4,6-tri(4-hydroxyphényl)heptène-2, le 1,3,5-tri(2-hydroxyphényl)benzène, le 1,1,1-tri(4-hydroxyphényl)éthane, le 2,6-bis(2-hydroxy-5-méthylbenzyl)-4-méthylphénol, le α,α',α''-tri(4-hydroxyphénol)-1,3,5-tri-isopropylbenzène, l'isatine-bisphénol, le 5-chloroisatine-bisphénol, le 5,7-dichloroisatine-bisphénol ou le 5-bromoisoatine-bisphénol.

5. Procédé selon la revendication 3 ou la revendication 4, dans lequel 0,01 à 3 % molaire de l'agent de ramification sont utilisés sur la base de la quantité du composé phénolique divalent.

6. Procédé selon la revendication 2, dans lequel 100 à 10 moles de l'acide vinylbenzoïque sont utilisées pour 100 moles du composé phénolique divalent, en formant ainsi des oligomères de polycarbonate comportant des groupes terminaux vinyliques.

7. Procédé selon la revendication 2, dans lequel 10 à 0,5 moles de l'acide vinylbenzoïque sont utilisées pour 100 moles du composé phénolique divalent, en formant ainsi des résines de polycarbonate comportant des groupes terminaux vinyliques.
